# EUROPEAN PATENT SPECIFICATION

(11) **EP 2 994 292 B1**
(45) Date of publication and mention of the grant of the patent: **10.04.2019**
(21) Application number: 13884025.1
(22) Date of filing: 08.05.2013
(51) Int. Cl.: B29C 65/34, B29C 65/30, F16L 47/03, B29C 65/22, F16L 21/00, B29L 23/00, B29C 73/34, B29C 73/04, B29C 65/00, F16L 58/18, F16L 59/20, F16L 13/02

(54) **METHOD AND APPARATUS FOR JOINING OR REPAIRING A PIPE SYSTEM**
VERFAHREN UND VORRICHTUNG ZUR VERBINDUNG ODER REPARATUR EINES ROHRSYSTEMS
PROCÉDÉ ET APPAREILLAGE POUR L'ASSEMBLAGE OU LA RÉPARATION D'UN SYSTÈME DE TUYAUX

(43) Date of publication of application: 16.03.2016
(73) Proprietor: TSC Innovation AB, 901 30 Umeå (SE)
(72) Inventor: GUNNARSSON, Lars, SE-169 31 Solna (SE)
(74) Representative: Zacco Sweden AB
(86) International application number: PCT/SE2013/050524
(87) International publication number: WO 2014/182207

(56) References cited:
- EP-A2- 0 943 419
- WO-A1-97/37167
- WO-A1-2006/037856
- WO-A1-2011/046503
- WO-A1-2012/093959
- WO-A1-2012/093959
- WO-A1-2013/089634
- US-A- 2 739 829
- US-A- 2 739 829
- US-A- 5 369 248
- US-A1- 2004 239 104
- US-B1- 6 680 464

## Description

### TECHNICAL FIELD

The present invention relates to a method and apparatus for installation and repair of pipe systems comprising at least two pipes made of a weldable plastic material according to independent claims 1 and 17.

### BACKGROUND

Pipe systems are used in many different transporting situations and for transport of different kinds of gases, liquids, fluids, mediums, materia or substances inside the pipes. The need for functioning attachments of the pipes to each other is very important, both to secure the transportation inside the pipe system from leaking out, but also from contamination or other damage from outside.

Some pipe systems are intended to be concealed underground, which entails large stresses. There will be a mechanical impact on the pipes owing to temperature changes, which result in expansion and contraction of the material. The pipe systems is also exposed to water or moisture that can penetrate it and cause the steel pipe to corrode, which over time can result in leaking and consequently require repairs. The pipe systems often runs under walls and the like, making it difficult and costly, in the event of leaking, to gain access to the damaged pipe systems that has to be dug out.

Even if the pipe system is placed on or above the ground the need for functioning attachments of the pipes to each other is very important. A leak can be located with relatively high accuracy but the cost of repairs of all kinds of pipe systems will be high. Consequently, it is of greatest importance to produce installations, joints of high quality and strength, both in new installation and when making repairs. Inconsistent quality, or, in the worst case, systematic defects in assembly, can in the long run be devastating to the overall economics of the pipe system.

There are presently on the market a number of methods of joining pipes. Experience has shown that methods that employ welded joints often have advantages over the long term, compared to other solutions. However, welding is not totally without problems.

One method is used for pipes made of a weldable polymer material and comprises the use of a welding band, electrically conductive band. Two pipes are to be connected to each other. One welding band is placed around each pipe end and covered by a sleeve made of weldable polymer material reaching over the distance between the two pipe ends, having an overlap on each pipe end. The sleeve is heated and is then shrunk on each pipe end. The band is connected to an electric device and by using resisting heating the band is heated. The band is heated and is then melting both the plastic of the pipe and the plastic of the sleeve. The plastics will then mix. When the electric device is disconnected or shut down the melted mixed plastics will cool down and join the sleeve to each the pipe as a weld is made.

The electric device is connected to the two ends of the band. The ends, or electrodes connected to the band, are bent and placed outside the pipe, projecting out through a slot in the sleeve, and the area where the band ends, or the electrodes, are to be put together is not really that precise. There is a space between the band ends, the electrodes, in the area of the pipe and sleeve. This is a critical point of the weld as there is no completed and controlled melting of the plastics in the area where the electric connections to the band ends is made. The band ends are drawn apart a bit and the plastics are not really heat treated in this area. This will result in a weak point of the weld where leak can occur.

In WO 2012/093959 is disclosed a method and device for welding of pipes of a weldable polymer material. A muff is placed with an overlap over the pipe ends. The muff is welded to the ends through placing an electrically conducting band that is permeable to molten plastic between the pipe and the muff, and a power supply is connected to the band, an electric current is supplied to the band and the surrounding polymer material such that they melt together around the band in order to form a weld.

In US 6680464 is disclosed a piping system that includes a plurality of pipe made of thermoplastic material, a coupling and an arrangement for securing the pipe to the coupling. The coupling is configured so that either a fusable seal or a mechanical seal can be used with the coupling to connect the pipe to the coupling with an electrofusion joining control device. Preferably the pipe and the coupling are made of thermoplastic material.

From US 2739829 is known a method of connecting the ends of tubes formed from a thermoplastic material. The method comprises placing metallic bands around portions of the tubes adjacent the ends, inserting the end portions of the tubes into a section of enlarged tubing, shrinking the section around the end portions and the bands and heating the bands to fuse the material of the section of tubing and the portions of the tubes adjacent the bands.

Further documents like EP 2 317 203 A1, US 6 131 954 A, WO 95/25243, US 4 096 017 A or WO 01/56731 A1 are disclosing the use of couplers or plastic sheet wrapped around the pipes ends and of heating bands placed between the pipe surface and the plastic sheet.

### SUMMARY OF THE INVENTION

One object of the present invention is to provide a method and an apparatus that in a simple, safe and effective way enables a reliable leek-proof welding when installing and repairing pipe systems 1 so that a good joint, weld, is formed.

This object is achieved with the method having the distinctive technical features presented in the characterizing portions of claim 1 and the apparatus having the distinctive technical features presented in the characterizing portions of claim 17.

Exemplifying embodiments can be found in the dependent claims.

Additional distinctive features and advantages of the invention will be presented in the following detailed description of the invention, which shall constitute an example, and thus shall not be interpreted in a manner that they limit the invention's scope of protection. To facilitate understanding, to the text have been added references to the attached drawings, in which equivalent or similar components have been provided the same or similar reference designation.

### BRIEF DESCRIPTION OF THE DRAWINGS

**Fig. 1** shows an apparatus according to the present invention placed in working position, to be able to work according to the method according to the present invention.
**Fig. 2** shows two outer pipes to be joined or repaired by both the method and the apparatus according to the present invention.
**Fig. 3** shows a detailed section of the area between a pipe and a sleeve to be connected according to both the method and the apparatus according to the present invention.
**Fig. 4** shows a power converter to be used both in the method and the apparatus according to the present invention.
**Fig. 5** **and** **6** show a construction comprising two power converters to be used both in the method and the apparatus according to the present invention.
**Fig. 7, 8** **and** **9** show three devices A1-A3, welding equipments, arranged at a weld area, made for working according to both the method and the apparatus according to the present invention.
**Fig. 10** shows an indicator unit to be used both in the method and the apparatus according to the present invention.

### DETAILED DESCRIPTION OF THE INVENTION

### Method

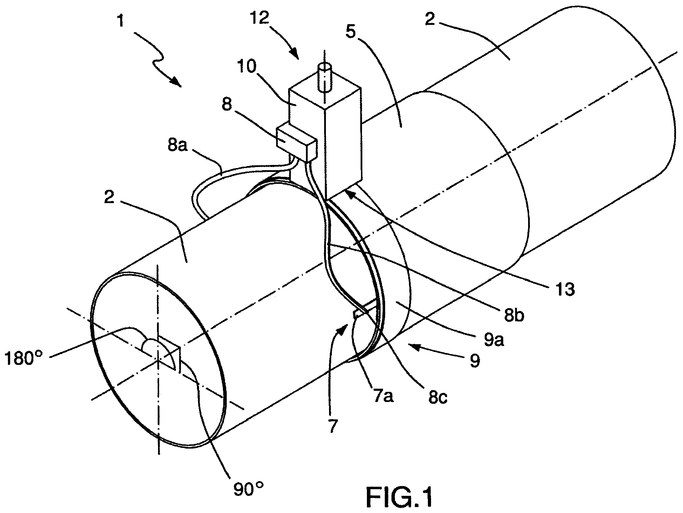

This invention concerns a method for joining a pipe system 1. The pipe system 1 comprises at least two pipes 2 that are to be connected to each other. The pipes 2 are made of weldable plastic, polymeric, material. See Fig. 1.

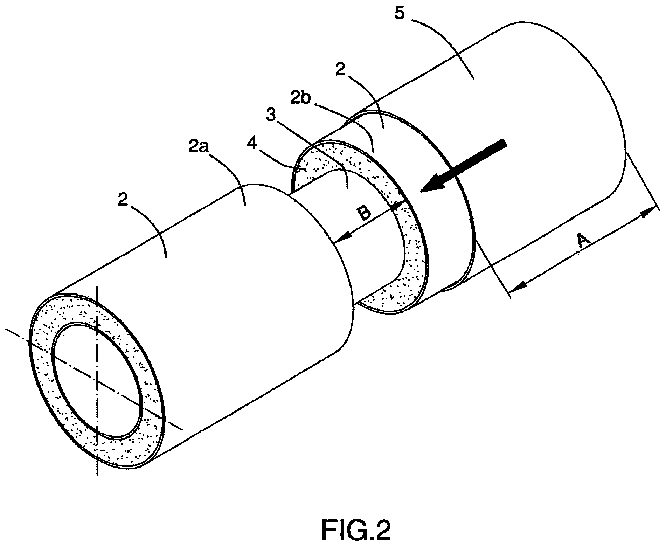

The pipe systems 1 can be made for transporting different kinds of gases, liquids, fluids, mediums, materia or substances, being pressurized or not. The pipe systems 1 can have different designs, the pipes 2 can have different constructions. The pipes 2 can comprise inner pipes 3 placed inside the pipes 2, then being outer pipes 2. The space between the outer pipe 2 and the inner pipe 3 can be filled with an insulation material 4. See Fig. 2. In the following description the wording "pipe 2" means the pipe that is to be welded with a sleeve and is the "outer pipe 2" if the pipe system is insulated.

Insulated pipe systems are ordinarily used for transporting a flowing heating or cooling fluid, the medium, as in district-heating or district-cooling pipe systems, and have a steel pipe for transporting the flowing fluid, the medium. The steel pipe is then embedded in insulation, usually made of polyurethane (PUR) foam, and on the outside there is an outer casing that protects from moisture, an outer pipe, made of a weldable plastic material, commonly of polyethylene. The pipe systems are fabricated in a factory in sections, with an outer pipe 2, an inner pipe 3, and insulation 4, which are then transported out to the installation site. Insulated pipe systems of this type can also be used for the transporting of for example oil, LNG and chemicals.

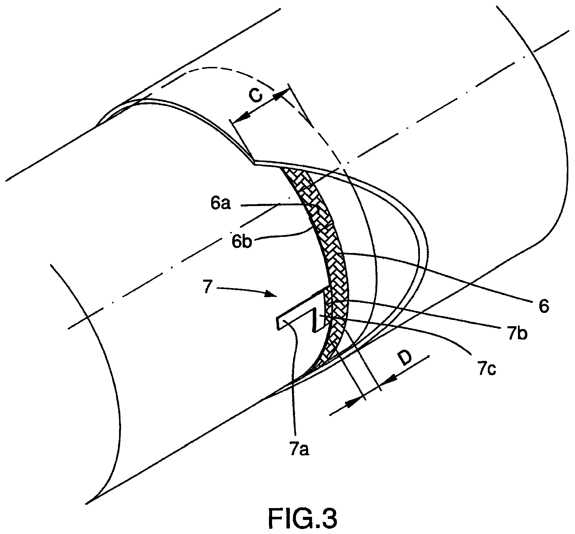

The method comprises the step of fitting a sleeve 5 made of weldable plastic, polymeric, material the distance between the two pipes 2, the sleeve 5 having an overlap on each pipe end 2a and 2b. See Fig. 1 and 2. The sleeve 5 will be attached the two pipes 2 and after welding the sleeve 5 will be a part of the pipe 2, the pipe system 1. The sleeve 5 has a length A that exceeds the distance B between the mutually opposing pipe-ends 2a and 2b such as to have an overlap the pipe ends 2a and 2b to a given extent C. See Fig. 3. The sleeve 5 is made in one piece and is a larger in diameter than the outer pipe 2.

The method also comprises the steps of placing an electrically conductive band 6 around the end of one of the pipes 2, an electrically conductive band 6 which is permeable to molten plastic, connecting the ends 6a and 6b of the band 6 to each other by placing the ends 6a and 6b overlapping each other, fitting the sleeve 5 over and against the pipe 2 the pipe end 2a or 2b, and the band 6, overlapping the pipe 2, the pipe end 2a or 2b, and covering the band 6. See Fig. 3.

There is also comprised in the method applying an electric current to the band 6 over a given period of time and thereby heating the band 6 to a determined temperature for a determined time and fusing the band 6 with the plastic surfaces of the pipe 2 and the sleeve 5 lying in abutment therewith to form a welding joint having a width D corresponding to the width of the band 6 and being fully executed around the pipe 2 and inside the sleeve 5. The band 6, and the weld, has a width smaller than, or similar to, the sleeve overlap C. See Fig. 1-3.

As the band ends 6a and 6b are placed overlapping each other the plastics of both the pipe 2 and the sleeve 5 will be heated all around the pipe 2 and sleeve 5 and the weld will be fully working all around, even in the band overlapping area. The method enables a reliable leek-proof welding when installing and repairing pipe systems 1 so that a good joint is formed in a simple, safe and effective way.

The former way to weld pipes 2 by using a band and to apply electric current specifically to the ends of the band, the ends projecting out through a slot in the sleeve, can cause uneven heating of the plastic areas and cause burning-through. The current distribution in the band can wary due to the long distance for the current to be transported in the band and thereby effect the temperature of the band in different ways in different areas. This will result in a weld having negative properties. To avoid this malfunction the invented method comprises placing the electrically conductive band 6 around the end of one outer pipe 2 and connecting at least two conductors 7 to the band 6 making it possible to attach the band 6 to an electrial device 8 applying the electric current to the band 6. See Fig. 1. The electric current will then be distributed from at least two places on and to the band 6 and the transport distances will be less long, resulting in better heating of the band 6 and the plastics of the pipe 2 and the sleeve 5.

The method comprises connecting at least two conductors 7 to the band 6, connecting at least two metal sheets 7a to the band 6. The connection can be done by attaching each conductor 7, each sheet 7a, to the band 6 by placing an extra band 7b between the band 6 and the sheet 7. Connecting an insulating device 7c between the band 6 and each the metal sheet 7a can also be done. Using the metal sheets 7a will make it possible to connect the electric current in an easy and well known electric directing way, using the extra band 7b makes sure that the weld will be done in a controlled manner an in an extra area, resulting in a weld point that is enhanced, and using the insulating device 7c vill provide a possibility to control the placement of the weld. See Fig. 3.

The connecting of at least two conductors 7 to the band 6 comprises placing the conductors 7 at fixed decided places around the band 6 for even distribution of the electric current around the band 6 and the heat around the pipe 2 and sleeve 5. When using two conductors 7 the method comprises placing the conductors 7 at about 180° displacement in relation to each other along the band 6 and placing the conductors 7 at about 90° displacement in relation to the electrial device 8, along the band 6. The description ofh the placing being "about" means that for different situations the placing can be both closer together and more far way. The importantcy of the placing is that not all the devices involved in the electric current disitribution is placed at one spot, in one area. See Fig. 1. This placing will result in a good distribution of the electric current along the band 6.

Work regarding joining or repairing pipes 1 is often done outside, having different weather circumstances. The pipe 2 can for exemple have a higher temperature on the top side due to sun shine than on the bottom side being placed away from the sun. When applying an electric current to the band 6 having two current inlets, using the conductors 7, placed more or less horisontally at 180° displacement in relation to each other gives the result that the effect needed to heat the plastics of the pipe 2 and the sleeve 5 in the area of the top side and bottom side having different temperatures will be selfregulated due to the different resistances in the areas having different temperatures. In the top area of the pipe 2, heated by the sun, the resistance in the band 6 is higher than on the bottom side and the current will choose the bottom side having lower resistance, more current will pass the way in the band 6 on the bottom side of the pipe. The current will by that work in the area that will need it, due to the resistance difference, and the heating will be the same all around the pipe 2.

The fitting of the sleeve 5 over, around and against the end 2a or 2b of the pipe 2 comprises heating the sleeve 5 being a shrink sleeve 5, made of shrinkable material controlled by adding heat, and thereby reducing the diameter of the sleeve 5 so that the inside of the sleeve 5 comes into contact with the outside of the pipe 2. The band 6 will then be fixed in place between the pipe 2 and the sleeve 5.

The fitting of the sleeve 5 over, around and against the end of the pipe 2 comprises attaching a pressure force on to and around the sleeve 5 at the part of the sleeve 5 fitted over, around and against the end of the pipe 2a or 2b. The attaching of a pressure force on to and around the sleeve 5 is made possible by using a pressure tool 9 working on and around the sleeve 6. See Fig. 1. This will make sure that the band 6 will be fixed in place between the pipe 2 and the sleeve 5.

The using of a pressure tool 9 comprises using of a clamping strap 9a which is looped around the sleeve 5 and connecting the free ends of the clamping strap 9a to a tensioning device 10 which functions to tighten the strap 9a around the sleeve 5 and therewith press the sleeve 5 against the pipe 2. This is not shown in the figures.

The method may comprise drilling a hole through the sleeve 5 for the purpose of pressure testing the made weld. If the pipe system 1 comprises an outer pipe 2 and an inner pipe 3 this hole can be used for filling the joint with foam for making the isolation completed. A plug has to be placed in the hole such as to seal the hole. This is not shown in the figures.

The power supply can be a problem. There can easily be heavy power losses, because current transformation can be necessary and the current has to be conducted over relatively long distances to reach the welding site itself. The available power supplies are not always the best. Another object of the invention is therefor to enable a reliable supply of current for welding during the installation and repair of insulated pipe systems so that a good joint is formed.

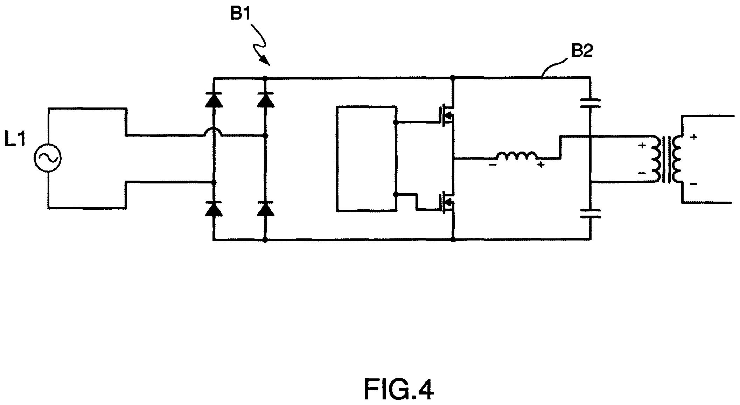

For this reason the method comprise for this the step of employing a power converter B1 which has a quasi-resonant converter B2 to produce the electric current that is to be connected to the band 6. See Fig. 4.

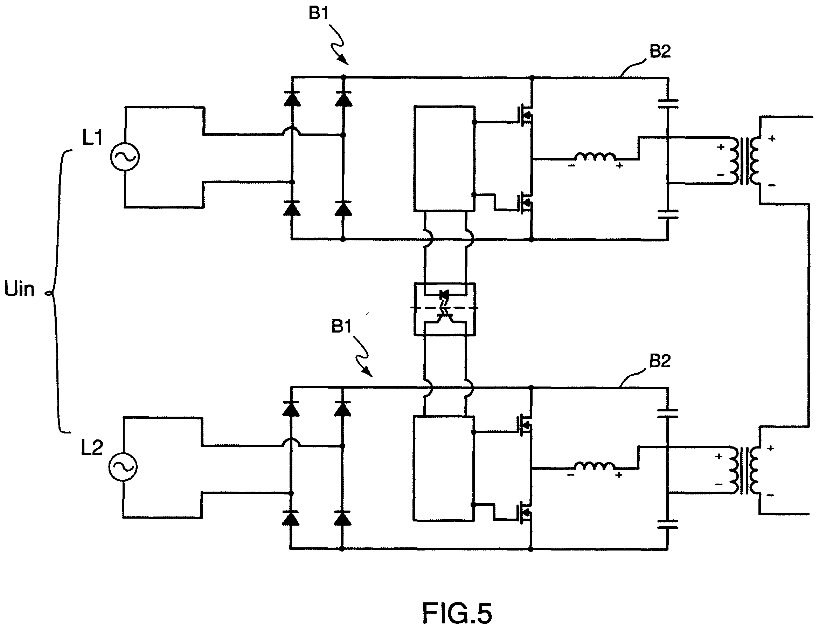

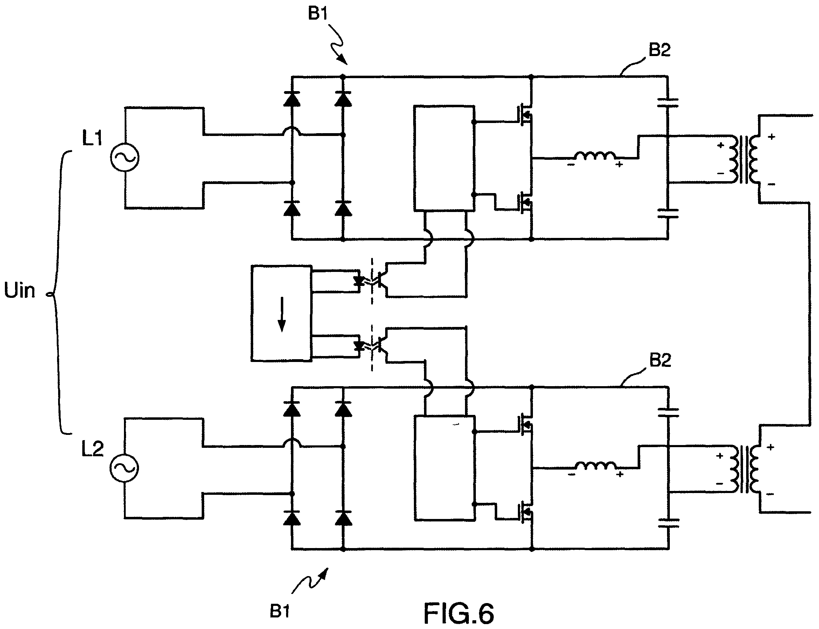

The method can also comprise the step of employing two series-connected power converters B1 that are connected to two different phase and summing the output voltage via the synchronous operation of two quasi-resonant converters B2 in order to produce the electric current that is to be connected to the band 6. See Fig. 5 and 6.

Heat must be supplied during a sufficiently long period for the temperature in the area of the band 6, the weld area, to become sufficiently high for a mechanically strong and sealing weld of high quality to be formed. If insufficient heat is supplied, parts of the weld area will not reach the desired temperature and the expected melting will not occur, and this will result in the weld being of lower quality. In contrast to this, if too much heat is supplied it is the case that there is a risk that the material in the ends of the pipes and the sleeve will be damaged through deformation of the pipe. It is therefore important to control carefully the supply of heat such that sufficient heat is supplied during a certain period of time, such that a weld of high quality is formed between the ends of the pipe 2 and the sleeve 5.

Another object of the invention is therefore to offer a method that make possible in a simple, efficient and secure manner reliable temperature control and control of the heat supply to the band 6, to the weld area, such that a high-quality weld is formed. For this reason the method comprise;
measuring the initial ambient temperature T₀ of the band area before the band 6 is heated,
measuring a voltage U_{L} across the band 6,
measuring the electrical current I_{L} supplied to the band 6,
calculating the initial resistance R₀ of the band 6 before the band 6 is heated,
supplying the electrical current to the band 6 in an altering or constant way,
calculating continuously the resistance R of the band 6 based on the voltage and the measured current,
calculating the change ΔR in resistance and
calculating the increase ΔT in temperature of the band 6 based on the change in resistance and
calculating the temperature T_{W} of the weld through adding the initial ambient temperature T₀ of the weld and the increase ΔT in temperature of the band 6.

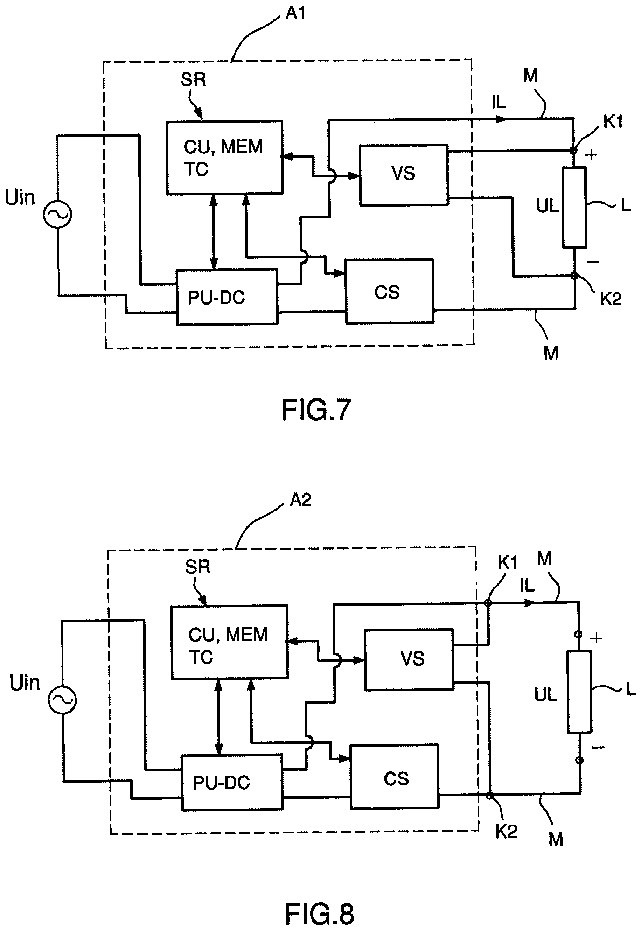

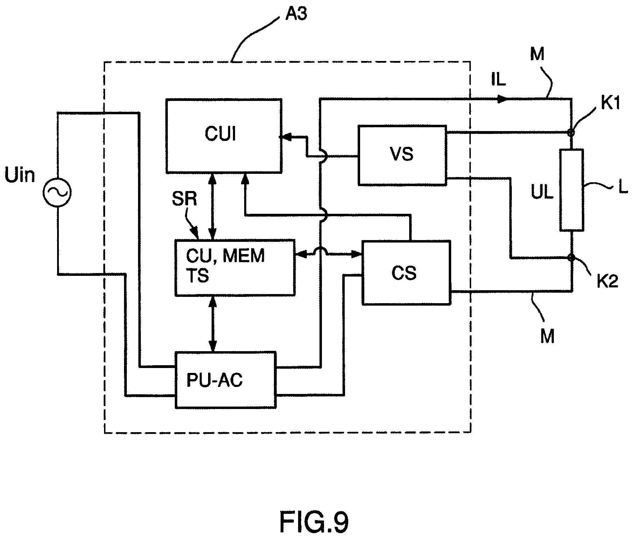

In Figs. 7-9 tree embodiments of a device A1-A3, a welding equipment, arranged at a weld area, made for working according to this method, are shown.

Once the welding process has ended, the welded joint must cool before the electrical device 8, the welding equipment, and the pressure device 9, the clamping strap 9a and the tension device 10,, can be removed, in order to avoid damage to the newly welded joint. The cooling period is a time-consuming part of the welding. In the context of production, it is important to achieve a high efficiency, and it is desirable to carry out the welding with a high weld quality and in a time-efficient manner.

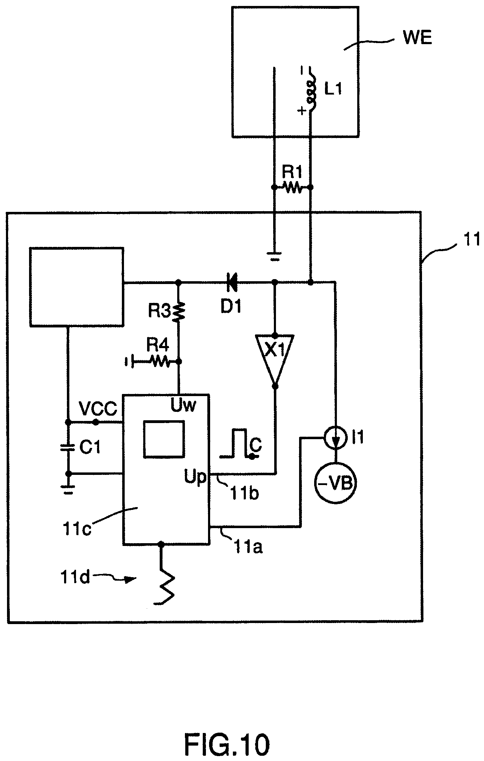

Another object of the invention is therefore to offer a method that make possible efficient and reliable temperature monitoring of the cooling process in the welded joint once the welding process has ended. For this reason the method comprise;
a measurement process is carried out after the welding process has ended that comprises the supply of a current Ip to the band 6 from an indicator unit 11,
that a resulting temperature-dependent parameter Sp of the band 6 is determined by the indicator unit 11, the value of Sp is stored in the indicator unit 11,
that a further current pulse Ip is supplied to the band from the indicator unit 11 after a predetermined time interval, that the parameter Sp in the band is determined and that the value of Sp is stored in the indicator unit 11,
that the indicator unit 11 monitors and evaluates the value of the parameter Sp or the relative change in the value of the parameter Sp,
that the measurement process is repeated until Sp reaches a plateau value or the relative change of Sp reaches a predetermined level,
that a signal arrangement signals that the welding equipment can be removed from the area of the weld when the indicator unit 11 indicates that the cooling process has ended.
See Fig. 10.

### Apparatus

The present invention also concerns an apparatus 12 to be used when practicing, using, working according to the above described method. The apparatus 12 shall be used when fitting the sleeve 5 over and against one or both the end 2a or 2b of one or both the pipes 2 and the band 6, overlapping and covering the band 6 and when applying the electric current to the band 6, thereby heating the band 6 to a determined temperature for a determined time and fusing the band 6 with the plastic surfaces of the pipe 2 and the sleeve 5 lying in abutment therewith. This result in forming a welding joint and the joint, the weld, being fully executed around the pipe 2 and inside the sleeve 5.The band 6, and the weld, has a width smaller than, or similar to, the sleeve overlap C. The apparatus comprises the device 8, the electric device, applying an electric current to the band 6 and thereby heating the band 6 and melting the plastic of the pipe 2 and the sleeve 5, and the device 9, the pressure tool, attaching a pressure force on to and around the sleeve 5 at the part of the sleeve 5 fitted over, around and against the end of the pipe 2. See Fig. 1-3.

The electric device 8 comprises at least two electric cables 8a and 8b each having an attaching device 8c, preferable at the end of each cable 8a and 0b, to be connected to the band 6. Each attaching device 8c is designed to be in working condition with a conductor 7 connected to the band 6.

The pressure tool 9 comprises the clamping strap 9a which is looped around the sleeve 5 and the tensioning device 10 to which the two free ends of the clamping strap 9a are connected to and which functions to tighten the loop and therewith press the sleeve 5 against the pipe 2. The work of the clamping strap 9a and the tensioning device 10 will make sure that the band 6 will be fixed in place between the pipe 2 and the sleeve 5. The working of the tensioning device is not shown in detail in the figures.

The apparatus 12 comprises a support device 13 to help the apparatus 12 to be placed on the outside of the sleeve 5 when the pressure tool 9 is used, when the tensioning device 11 is attached to the clamping strap 9a. The support device 13 comprises guide rollers arranged in mutually parallel and mutually spaced relationship adjacent the support device, wherein the distance between the rollers is much smaller than the diameters of the pipe. The end parts of the clamping strap 9a are extending from the loop run between the guide rollers. The support device 13 comprises an abutment surface which is concave so as to provide good abutment with the outwardly curved pipe surface. At least the abutment surface is made of an electrically insulating material. This support device 13 is not shown in detail in the figures.

The power supply can be a problem. There can easily be heavy power losses, because current transformation can be necessary and the current has to be conducted over relatively long distances to reach the welding site itself. The available power supplies are not always the best. Another object of the invention is therefor to enable a reliable supply of current for welding during the installation and repair of insulated pipe systems 1 so that a good joint is formed.

For this reason the apparatus 12 comprises a power converter B1 which has a quasi-resonant converter B2 for producing the electric current that is to be connected to the band 6 for a determined period of time, to heat the band 6 and the surrounding polymer material of the pipe 2 and the sleeve 5 so that they fuse together around the band 6 in order to form a weld joint. See Fig. 4.

The apparatus can in another embodiment comprise two series-connected power converters B1 that are connected to two different phases and two quasi-resonant converters B2 that, via synchronous operation, sum the output voltage by performing a summation function to produce the electric current that is to be connected to the band 6 for a determined period of time, to heat the band 6 and the surrounding polymer material of the pipe 2 and the sleeve 5 so that they fuse together around the band 6 in order to form a weld joint. See Fig. 5 and 6.

Heat must be supplied during a sufficiently long period for the temperature in the area of the band 6, the weld area, to become sufficiently high for a mechanically strong and sealing weld of high quality to be formed. If insufficient heat is supplied, parts of the weld area will not reach the desired temperature and the expected melting will not occur, and this will result in the weld being of lower quality. In contrast to this, if too much heat is supplied it is the case that there is a risk that the material in the ends of the pipes and the sleeve will be damaged through deformation of the pipe. It is therefore important to control carefully the supply of heat such that sufficient heat is supplied during a certain period of time, such that a weld of high quality is formed between the ends of the pipe 2 and the sleeve 5. Another object of the invention is therfore to offer a method that make possible in a simple, efficient and secure manner reliable temperature control and control of the heat supply to the band 6, to the weld area, such that a high-quality weld is formed.

For this reason the apparatus comprises a control and monitoring unit SR that has means CS that measure and regulate the electrical current that is supplied to the band 6, and means VS that measure and regulate the voltage U_{L} across the band 6, a thermo-element TS for the measurement of the initial ambient temperature T₀ of the weld, and a calculation unit CU for the calculation of the resistance R in the band 6 and the temperature T_{W} of the weld. In Figs. 7-9 tree embodiments of a device A1-A3, a welding equipment, arranged at a weld area, are shown.

Once the welding process has ended, the welded joint must cool before the electrical device 8, the welding equipment, and the pressure device 9, the tension arrangement, can be removed, in order to avoid damage to the newly welded joint. The cooling period is a time-consuming part of the welding. In the context of production, it is important to achieve a high efficiency, and it is desirable to carry out the welding with a high weld quality and in a time-efficient manner. Another object of the invention is to offer a method and an apparatus that make possible efficient and reliable temperature monitoring of the cooling process in the welded joint once the welding process has ended.

For this reason the apparatus comprises an indicator unit 11 that comprises a signal output 11a that is connected to the electrically conducting band 6 in order to supply a current pulse Ip to the band 6, at least one signal input 11b connected to the electrically conducting band 6 in order to receive a signal concerning a resulting temperature-dependent parameter Sp, a CPU circuit 11c for the evaluation of the resulting temperature-dependent parameter Sp, and a signal arrangement 11d. See Fig. 10.

## Claims

1. A method for joining or repairing a pipe system (1) that comprises a least two pipes (2) made of weldable plastic material comprising the following steps ; fitting a sleeve (5) which is made in one piece and shaped as a tube made of weldable plastic material the distance between the two pipes (2), the sleeve (5) having a length A that exceeds the distance B between the mutually opposing pipes (2), such as to overlap each pipe end (2a, 2b) to a given extent C,
placing an electrically conductive band (6) around one of the pipes (2), the band (6) having two ends (6a, 6b),
connecting the band ends (6a, 6b) to each other by placing the band ends (6a, 6b) overlapping each other,
connecting at least two conductors (7) to the band (6) making it possible to attach the band (6) to an electrical device (8) applying the electric current to the band (6).
placing the conductors (7) at fixed decided places around the band (6) for even distribution of the electric current around the band (6) and the heat around the pipe (2) and sleeve (5),
fitting the sleeve (5) over and against the pipe (2) and the band (6), and
applying an electric current to the band (6) over a given period of time,
thereby heating the band (6) to a determined temperature for a determined time and fusing the band (6) with the plastic surfaces of the pipe (2) and the sleeve (5) lying in abutment therewith to form a welding joint being fully executed around the pipe (2) and inside the sleeve (5).

2. A method according to claim 1 where connecting at least two conductors (7) to the band (6) comprises connecting at least two metal sheets (7a) to the band (6).

3. A method according to claim 1 or 2 where connecting at least two conductors (7) to the band (6) comprises connecting at least one extra band (7b) between the band (6) and each conductor (7) or each metal sheet (7a).

4. A method according to anyone of claims 1-3 where connecting at least two conductors (7) to the band (6) comprises connecting at least one insulating device (7c) between the band (6) and each conductor (7) or each metal sheet (7a).

5. A method according to claim 4 comprising connecting of two conductors (7) to the band (6) and placing the conductors (7) at about 180° displacement in relation to each other along the band (6).

6. A method according to anyone of claims 1-5 comprising connecting of two conductors (7) to the band (6) and placing the conductors (7) at about 90° displacement in relation to an electrical device (8), and applying the electric current to the band (6) and along the band (6).

7. A method according to anyone of claim 1-6 where the fitting of the sleeve (5) over, around and against the pipe (2) comprises heating the sleeve (5) being a shrink sleeve.

8. A method according to anyone of claims 1-7 where the fitting of the sleeve (5) over, around and against the pipe (2) comprises attaching a pressure force on to and around the sleeve (5) at the part of the sleeve (5) fitted over, around and against the pipe (2).

9. A method according to claim 8 where the attaching of a pressure force on to and around the sleeve (5) is made possible by using a pressure tool (9) working on and around the sleeve (5).

10. A method according to claim 9 where the using of a pressure tool (9) comprises using of a clamping strap (9a) which is looped around the sleeve (5) and connecting the free ends of the clamping strap (9a) to a tensioning device (10) which functions to tighten the loop of the clamping strap (9a) and therewith press the sleeve (5) against the pipe (2).

11. A method according to anyone of claims 1-10 comprising
drilling a hole through the sleeve for the purpose of pressure testing the made weld.

12. A method according to anyone of claims 1-11 comprising employing a power converter (B1) which has a quasi-resonant converter (B2) to produce the electric current that is to be connected to the band (6).

13. A method according to anyone of claims 1-11 comprising employing two series-connected power converters (B1) that are connected to two different phase and summing the output voltage via the synchronous operation of two quasi-resonant converters (B2) in order to produce the electric current that is to be connected to the band (6).

14. A method according to anyone of claims 1-13 comprising
measuring the initial ambient temperature T0 of the weld before the band (6) is heated,
measuring a voltage U_{L} across the band (6),
measuring the electrical current l_{L} supplied to the band (6),
calculating the initial resistance R₀ of the band before the band (6) is heated,
supplying the electrical current to the band 6 in an altering or constant way,
calculating continuously the resistance R of the band (6) based on the voltage and the measured current,
calculating the change AR in resistance,
calculating the increase ΔT in temperature of the band (6) based on the change in resistance and calculating the temperature T_{w} of the weld through adding the initial ambient temperature T0 of the weld and the increase ΔT in temperature of the band (6).

15. A method according to anyone of claims 1-14 comprising
carrying out a measurement process after the welding process has ended that comprises the supply of a current Ip to the band (6) from an indicator unit (11),
determining a resulting temperature-dependent parameter Sp of the band (6) by the indicator unit (11), the value of Sp is stored in the indicator unit (11),
supplying a further current pulse Ip to the band (6) from the indicator unit (11) after a predetermined time interval,
determining the parameter Sp in the band (6), and storing the value of Sp in the indicator unit (11),
monitoring and evaluating by the indicator unit (11) the value of the parameter Sp or the relative change in the value of the parameter Sp,
repeating the measurement process until Sp reaches a plateau value or the relative change of Sp reaches a predetermined level,
signalling the end of the welding process by using a signal arrangement when the indicator unit (11) indicates that the cooling process has ended,
and removing the welding equipment from the working area of the weld.

16. Method according to anyone of claims 1-15 for joining or repairing thermally insulated pipe system (1) comprising a weldable plastic outer pipe (2) which surrounds an inner pipe (3) embedded in an insulating layer (4), wherein the inner pipe (3) lies generally exposed or is laid bare between two mutually opposing outer pipe-ends (2a, 2b), wherein the method comprises fitting a sleeve (5) of weldable plastic material over the exposed part of the inner pipe (3).

17. An apparatus (12) to be used when using the method in anyone of claims 1-16 when fitting a sleeve (5) made in one piece and shaped as a tube over and against the pipe (2) and the band (6), overlapping the pipe (2) and covering the band (6), and applying the electric current to the band (6) the apparatus comprising an electric device (8) configured for applying an electric current to the band (6) and thereby heating the band (6),
a pressure tool device (9) configured for attaching a pressure force on to and around the sleeve (5) at the part of the sleeve (5) fitted over, around and against the pipe (2), where the pressure tool comprises a support device (13) having a concave abutment surface to provide abutment with the outwardly curved pipe surface, where the electric device (8) comprises at least two electric cables (8a, 8b) each having an attaching device (8c) to be connected to the band (6) and where each attaching device (8c) is designed to be in working condition with a conductor (7) connected to the band (6).

18. Apparatus (12) according to claim 17 where the pressure tool (9) comprises a clamping strap (9a) which is looped around the sleeve (5) and which has two free ends and a tensioning device (10) to which the ends of the clamping strap (9a) are connected to and which functions to tighten the loop and therewith press the sleeve (5) against the pipe (2).

19. Apparatus (12) according to anyone of claims 17-18 comprising a support device (13) to help the apparatus (12) to be placed on the outside of the sleeve (5) when the pressure tool (9) is attached to the sleeve (5).

20. Apparatus (12) according to claim 19 where the support device (13) comprises guide rollers arranged in mutually parallel and mutually spaced relationship adjacent the support device (13).

21. Apparatus (12) according to claim 19 or 20 where the support device (13) comprises an abutment surface which is concave so as to provide good abutment with the outwardly curved sleeve (5) and wherein at least the abutment surface is made of an electrically insulating material.

22. Apparatus (12) according to anyone of claims 17-21 comprising a power converter (B1) which has a quasi-resonant converter (B2) for producing the electric current that is to be connected to the band (6) for a determined period of time, to heat the band (6) and the surrounding polymer material so that they fuse together around the band (6) in order to form a weld joint.

23. Apparatus (12) according to anyone of claims 17-22 comprising two series-connected power converters (B1) that are connected to two different phases and two quasi-resonant converters (B2) that, via synchronous operation, sum the output voltage by performing a summation function to produce the electric current that is to be connected to the band (6) for a determined period of time, to heat the band (6) and the surrounding polymer material so that they fuse together around the band (6) in order to form a weld joint.

24. Apparatus (12) according to anyone of claims 17-23 comprising a control and monitoring unit (SR) that has means (CS) that measure and regulate the electrical current that is supplied to the band, and means (VS) that measure and regulate the voltage UL across the band (6), a thermoelement (TS) for the measurement of the initial ambient temperature T0 of the weld, and a calculation unit (CU) for the calculation of the resistance R in the band (6) and the temperature Tw of the weld.

25. Apparatus (12) according to anyone of claims 17-24 comprising an indicator unit (11) that comprises a signal output (11a) that is connected to the band (6) in order to supply a current pulse Ip to the band (6), at least one signal input (lib) connected to the band (6) in order to receive a signal concerning a resulting temperature-dependent parameter Sp, a CPU circuit (11c) for the evaluation of the resulting temperature-dependent parameter Sp, and a signal arrangement (11d).

## Patentansprüche

1. Verfahren zum Verbinden oder Reparieren eines Rohrsystems (1), das mindestens zwei Rohre (2) aus schweißbarem Kunststoffmaterial umfasst, die folgenden Schritte umfassend:
das Montieren einer Hülse (5), die einstückig hergestellt ist und als eine Röhre aus schweißbarem Kunststoffmaterial geformt ist, dem Abstand zwischen den beiden Rohren (2), wobei die Hülse (5) eine Länge A aufweist, die den Abstand B zwischen den einander gegenüberliegenden Rohren (2) überschreitet, so dass sie jedes Rohrende (2a, 2b) bis zu einem vorgegebenen Maß C überlappt,
das Anordnen eines elektrisch leitfähigen Bandes (6) um eines der Rohre (2) herum, wobei das Band (6) zwei Enden (6a, 6b) aufweist,
das Verbinden der Bandenden (6a, 6b) miteinander, indem die Bandenden (6a, 6b) einander überlappend angeordnet werden,
das Verbinden von mindestens zwei Leitern (7) mit dem Band (6), was es ermöglicht, das Band (6) an einer elektrischen Vorrichtung (8) anzubringen, die den elektrischen Strom an das Band (6) anlegt.
das Platzieren der Leiter (7) an festen, festgelegten Stellen um das Band (6) herum für eine gleichmäßige Verteilung des elektrischen Stroms um das Band (6) und der Wärme um das Rohr (2) und die Hülse (5) herum,
das Montieren der Hülse (5) über und gegen das Rohr (2) und das Band (6), und
das Anlegen eines elektrischen Stroms an das Band (6) über eine vorgegebene Zeitdauer,
wodurch das Band (6) über eine bestimmte Zeitspanne auf eine bestimmte Temperatur erhitzt und das Band (6) mit den Kunststoffoberflächen des Rohres (2) und der damit anstoßenden Hülse (5) verschmolzen wird, um eine vollständig um das Rohr (2) und innerhalb der Hülse (5) ausgeführte Schweißverbindung zu bilden.

2. Verfahren nach Anspruch 1, wobei das Verbinden von mindestens zwei Leitern (7) mit dem Band (6) das Verbinden von mindestens zwei Metallblechen (7a) mit dem Band (6) umfasst.

3. Verfahren nach Anspruch 1 oder 2, wobei das Verbinden von mindestens zwei Leitern (7) mit dem Band (6) das Verbinden mindestens eines zusätzlichen Bandes (7b) zwischen dem Band (6) und jedem Leiter (7) oder jedem Metallblech (7a) umfasst.

4. Verfahren nach einem der Ansprüche 1-3, wobei das Verbinden von mindestens zwei Leitern (7) mit dem Band (6) das Verbinden mindestens einer isolierenden Vorrichtung (7c) zwischen dem Band (6) und jedem Leiter (7) oder jedem Metallblech (7a) umfasst.

5. Verfahren nach Anspruch 4, umfassend das Verbinden von zwei Leitern (7) mit dem Band (6) und das Anordnen der Leiter (7) in einer Verschiebung von etwa 180° in Bezug zueinander entlang des Bandes (6).

6. Verfahren nach einem der Ansprüche 1-5, umfassend das Verbinden von zwei Leitern (7) mit dem Band (6) und das Anordnen der Leiter (7) in einer Verschiebung von etwa 90° in Bezug zu einer elektrischen Vorrichtung (8) und das Anlegen des elektrischen Stroms an das Band (6) und entlang des Bandes (6).

7. Verfahren nach einem der Ansprüche 1-6, wobei das Montieren der Hülse (5) über, um und gegen das Rohr (2) das Erhitzen der Hülse (5), die eine Schrumpfhülse ist, umfasst.

8. Verfahren nach einem der Ansprüche 1-7, wobei das Montieren der Hülse (5) über, um und gegen das Rohr (2) das Anbringen einer Druckkraft auf und um die Hülse (5) an dem Teil der Hülse (5) umfasst, der über, um und gegen das Rohr (2) montiert wird.

9. Verfahren nach Anspruch 8, wobei das Anbringen einer Druckkraft auf und um die Hülse (5) durch Verwendung eines auf und um die Hülse (5) wirkenden Druckwerkzeugs (9) ermöglicht wird.

10. Verfahren nach Anspruch 9, wobei das Verwenden eines Druckwerkzeugs (9) das Verwenden eines Spannbandes (9a), das um die Hülse (5) herum gewunden ist, und das Verbinden der freien Enden des Spannbandes (9a) mit einer Spannvorrichtung (10), die zum Festziehen der Schlaufe des Spannbandes (9a) und damit zum Drücken der Hülse (5) gegen das Rohr (2) dient, umfasst.

11. Verfahren nach einem der Ansprüche 1-10, umfassend das Bohren eines Lochs durch die Hülse zum Zweck des Drucktests der hergestellten Schweißstelle.

12. Verfahren nach einem der Ansprüche 1-11, umfassend das Einsetzen eines Leistungswandlers (B1), der einen Quasi-Resonanzwandler (B2) aufweist, um den mit dem Band (6) zu verbindenden elektrischen Strom zu erzeugen.

13. Verfahren nach einem der Ansprüche 1-11, umfassend das Einsetzen von zwei in Reihe geschalteten Leistungswandlern (B1), die mit zwei verschiedenen Phasen verbunden sind und die Ausgangsspannung über den synchronen Betrieb zweier Quasi-Resonanzwandler (B2) summieren, um den mit dem Band (6) zu verbindenden elektrischen Strom zu erzeugen.

14. Verfahren nach einem der Ansprüche 1-13, umfassend
das Messen der anfänglichen Umgebungstemperatur T0 der Schweißstelle, bevor das Band (6) erhitzt wird,
das Messen einer Spannung U_{L} über das Band (6) hinweg,
das Messen des dem Band (6) zugeführten elektrischen Stroms I_{L},
das Berechnen des Anfangswiderstands R₀ des Bandes, bevor das Band (6) erhitzt wird,
das Zuführen des elektrischen Stroms zu dem Band 6 in einer verändernden oder konstanten Weise,
das kontinuierliche Berechnen des Widerstands R des Bandes (6) basierend auf der Spannung und dem gemessenen Strom,
das Berechnen der Änderung AR des Widerstands,
das Berechnen des Anstiegs ΔT der Temperatur des Bandes (6) auf Grundlage der Widerstandsänderung und das Berechnen der Temperatur T_{w} der Schweißstelle durch Addieren der anfänglichen Umgebungstemperatur T0 der Schweißstelle und der Zunahme ΔT der Temperatur des Bandes (6).

15. Verfahren nach einem der Ansprüche 1-14, umfassend
das Durchführen eines Messprozesses nach Beendigung des Schweißprozesses, der die Zufuhr eines Stroms Ip von einer Anzeigeeinheit (11) zu dem Band (6) umfasst,
das Ermitteln eines resultierenden temperaturabhängigen Parameters Sp des Bandes (6) durch die Anzeigeeinheit (11), wobei der Wert von Sp in der Anzeigeeinheit (11) gespeichert wird,
das Zuführen eines weiteren Stromimpulses Ip von der Anzeigeeinheit (11) zu dem Band (6) nach einem vorbestimmten Zeitintervall,
das Bestimmen des Parameters Sp in dem Band (6) und das Speichern des Wertes von Sp in der Anzeigeeinheit (11),
das Überwachen und Bewerten des Wertes des Parameters Sp oder der relativen Änderung des Wertes des Parameters Sp durch die Anzeigeeinheit (11), das Wiederholen des Messprozesses bis Sp einen Plateauwert erreicht oder die relative Änderung von Sp einen vorbestimmten Pegel erreicht,
das Signalisieren des Endes des Schweißprozesses unter Verwendung einer Signalanordnung, wenn die Anzeigeeinheit (11) anzeigt, dass der Kühlprozess beendet ist,
und das Entfernen der Schweißausrüstung aus dem Arbeitsbereich der Schweißstelle.

16. Verfahren nach einem der Ansprüche 1-15 zum Verbinden oder Reparieren eines thermisch isolierten Rohrsystems (1), umfassend ein Außenrohr (2) aus schweißbarem Kunststoff, das ein Innenrohr (3) umschließt, das in eine Isolierschicht (4) eingebettet ist, wobei das Innenrohr (3) in der Regel zwischen zwei einander gegenüberliegenden Außenrohrenden (2a, 2b) freiliegt oder freigelegt ist, wobei das Verfahren das Montieren einer Hülse (5) aus schweißbarem Kunststoffmaterial über den freiliegenden Teil des Innenrohres (3) umfasst.

17. Apparat (12) zur Verwendung beim Anwenden des Verfahrens nach einem der Ansprüche 1-16, wenn eine Hülse (5), die einstückig ausgebildet ist und als eine Röhre über und gegen das Rohr (2) und das Band (6) geformt ist, das Rohr (2) überlappend und das Band (6) bedeckend montiert wird und der elektrische Strom an das Band (6) angelegt wird,
wobei der Apparat Folgendes umfasst:
eine elektrische Vorrichtung (8), die zum Anlegen eines elektrischen Stroms an das Band (6) und dadurch zum Erhitzen des Bandes (6) konfiguriert ist,
eine Druckwerkzeugvorrichtung (9), die zum Anbringen einer Druckkraft auf und um die Hülse (5) an dem Teil der Hülse (5), der über, um und gegen das Rohr (2) montiert ist, konfiguriert ist,
wobei das Druckwerkzeug eine Stützvorrichtung (13) mit einer konkaven Anlagefläche aufweist, um ein gegenseitiges Anliegen an der nach außen gekrümmten Rohrfläche bereitzustellen, wobei die elektrische Vorrichtung (8) mindestens zwei elektrische Kabel (8a, 8b) mit jeweils einer mit dem Band (6) zu verbindenden Befestigungseinrichtung (8c) aufweist, und wobei jede Befestigungsvorrichtung (8c) dazu ausgelegt ist, mit einem Leiter (7), der mit dem Band (6) verbunden ist, in Arbeitszustand zu stehen.

18. Apparat (12) nach Anspruch 17, wobei das Druckwerkzeug (9) Folgendes umfasst:
ein um die Hülse (5) gewundenes Spannband (9a) mit zwei freien Enden und einer Spannvorrichtung (10), mit der die Enden des Spannbandes (9a) verbunden sind und die dazu dient, die Schlaufe zu spannen und damit die Hülse (5) gegen das Rohr (2) zu drücken.

19. Apparat (12) nach einem der Ansprüche 17-18, die eine Stützvorrichtung (13) umfasst, um zu helfen, dass der Apparat (12) auf der Außenseite der Hülse (5) platziert wird, wenn das Druckwerkzeug (9) an der Hülse (5) angebracht ist.

20. Apparat (12) nach Anspruch 19, wobei die Stützvorrichtung (13) Führungsrollen umfasst, die in zueinander paralleler und gegenseitig beabstandeter Beziehung benachbart zu der Stützvorrichtung (13) angeordnet sind.

21. Apparat (12) nach Anspruch 19 oder 20, wobei die Stützvorrichtung (13) eine Anlagefläche umfasst, die konkav ist, um eine gute Anlage mit der nach außen gekrümmten Hülse (5) zu bieten, und wobei mindestens die Anlagefläche aus einem elektrisch isolierenden Material hergestellt ist.

22. Apparat (12) nach einem der Ansprüche 17-21, umfassend einen Leistungswandler (B1), der einen Quasi-Resonanzwandler (B2) zur Erzeugung des mit dem Band (6) für eine bestimmte Zeitdauer zu verbindenden elektrischen Stroms aufweist, um das Band (6) und das umgebende Polymermaterial zu erhitzen, damit sie um das Band (6) herum miteinander verschmelzen, um eine Schweißverbindung zu bilden.

23. Apparat (12) nach einem der Ansprüche 17-22, umfassend zwei in Reihe geschaltete Leistungswandler (B1), die mit zwei verschiedenen Phasen und zwei Quasi-Resonanzwandlern (B2) verbunden sind, die, durch synchronen Betrieb, die Ausgangsspannung durch Durchführen einer Summationsfunktion summieren, um den mit dem Band (6) über eine bestimmte Zeitdauer zu verbindenden elektrischen Strom zu produzieren, um das Band (6) und das umgebende Polymermaterial zu erhitzen, damit sie um das Band (6) herum miteinander verschmelzen, um eine Schweißverbindung zu bilden.

24. Apparat (12) nach einem der Ansprüche 17-23, umfassend eine Steuerungs- und Überwachungseinheit (SR), die Mittel (CS) aufweist, die den elektrischen Strom messen und regeln, der dem Band zugeführt wird, und Mittel (VS) aufweist, die die Spannung UL über das Band (6) hinweg messen und regeln, ein Thermoelement (TS) für die Messung der anfänglichen Umgebungstemperatur T0 der Schweißstelle und eine Berechnungseinheit (CU) zur Berechnung des Widerstands R in dem Band (6) und der Temperatur Tw der Schweißstelle.

25. Apparat (12) nach einem der Ansprüche 17-24, umfassend eine Anzeigeeinheit (11), die einen Signalausgang (11a) umfasst, der mit dem Band (6) verbunden ist, um dem Band (6) einen Stromimpuls Ip zuzuführen, mindestens einen Signaleingang (lib), der mit dem Band (6) verbunden ist, um ein Signal in Bezug auf einen resultierenden temperaturabhängigen Parameter Sp zu empfangen, eine CPU-Schaltung (11c) zur Auswertung des resultierenden temperaturabhängigen Parameters Sp, und eine Signalanordnung (11d).

## Revendications

1. Procédé pour joindre ou réparer un système de tuyau (1) qui comprend au moins deux tuyaux (2) constitués de matière plastique soudable, comprenant les étapes suivantes ;
le montage d'un manchon (5) qui est fabriqué en une pièce et profilé en tant que tube constitué de matière plastique soudable sur la distance entre les deux tuyaux (2), le manchon (5) ayant une longueur A qui dépasse la distance B entre les tuyaux mutuellement opposés (2), de façon à chevaucher chaque extrémité de tuyau (2a, 2b) à un certain degré C,
la mise en place d'une bande électroconductrice (6) autour d'un des tuyaux (2), la bande (6) ayant deux extrémités (6a, 6b),
la connexion des extrémités de bande (6a, 6b) l'une à l'autre en plaçant les extrémités de bande (6a, 6b) se chevauchant l'une l'autre,
la connexion d'au moins deux conducteurs (7) à la bande (6) ce qui permet de fixer la bande (6) à un dispositif électrique (8) appliquant le courant électrique à la bande (6).
la mise en place des conducteurs (7) à des emplacements fixes choisis autour de la bande (6) pour une distribution homogène du courant électrique autour de la bande (6) et de la chaleur autour du tuyau (2) et du manchon (5),
le montage du manchon (5) par-dessus et contre le tuyau (2) et la bande (6), et
l'application d'un courant électrique à la bande (6) pendant une période de temps donnée,
ce qui permet de chauffer la bande (6) à une température déterminée pendant un temps déterminé et de fondre la bande (6) avec les surfaces en plastique du tuyau (2) et du manchon (5) se trouvant en butée avec celle-ci pour former un joint de soudure qui est complètement exécuté autour du tuyau (2) et à l'intérieur du manchon (5).

2. Procédé selon la revendication 1, où la connexion d'au moins deux conducteurs (7) à la bande (6) comprend la connexion d'au moins deux feuilles métalliques (7a) à la bande (6).

3. Procédé selon la revendication 1 ou 2, où la connexion d'au moins deux conducteurs (7) à la bande (6) comprend la connexion d'au moins une bande supplémentaire (7b) entre la bande (6) et chaque conducteur (7) ou chaque feuille métallique (7a).

4. Procédé selon l'une quelconque des revendications 1 à 3, où la connexion d'au moins deux conducteurs (7) à la bande (6) comprend la connexion d'au moins un dispositif isolant (7c) entre la bande (6) et chaque conducteur (7) ou chaque feuille métallique (7a).

5. Procédé selon la revendication 4, comprenant la connexion de deux conducteurs (7) à la bande (6) et la mise en place des conducteurs (7) à un déplacement d'environ 180° l'un par rapport à l'autre le long de la bande (6).

6. Procédé selon l'une quelconque des revendications 1 à 5, comprenant la connexion de deux conducteurs (7) à la bande (6) et la mise en place des conducteurs (7) à un déplacement d'environ 90° par rapport à un dispositif électrique (8), et l'application du courant électrique à la bande (6) et le long de la bande (6).

7. Procédé selon l'une quelconques des revendications 1 à 6, où le montage du manchon (5) par-dessus, autour et contre le tuyau (2) comprend un chauffage du manchon (5) qui est un manchon thermorétractable.

8. Procédé selon l'une quelconque des revendications 1 à 7, où le montage du manchon (5) par-dessus, autour et contre le tuyau (2) comprend l'attribution d'une force de pression sur et autour du manchon (5) au niveau de la partie du manchon (5) montée par-dessus, autour et contre le tuyau (2).

9. Procédé selon la revendication 8, où l'attribution d'une force de pression sur et autour du manchon (5) est rendue possible en utilisant un outil de compression (9) agissant sur et autour du manchon (5).

10. Procédé selon la revendication 9, où l'utilisation d'un outil de compression (9) comprend l'utilisation d'une sangle de serrage (9a) qui est enroulée en boucle autour du manchon (5) et la connexion des extrémités libres de la sangle de serrage (9a) à un dispositif tendeur (10) qui fonctionne pour serrer la boucle de la sangle de serrage (9a) et avec celle-ci presse le manchon (5) contre le tuyau (2).

11. Procédé selon l'une quelconque des revendications 1 à 10, comprenant le forage d'un trou à travers le manchon en vue d'un essai de pression de la soudure réalisée.

12. Procédé selon l'une quelconque des revendications 1 à 11, comprenant le recours à un convertisseur de puissance (B1) qui a un convertisseur quasirésonant (B2) pour produire le courant électrique qui doit être connecté à la bande (6).

13. Procédé selon l'une quelconque des revendications 1 à 11, comprenant le recours à deux convertisseurs de puissance connectés en série (B1) qui sont connectés à deux phases différentes et la sommation de la tension de sortie par l'intermédiaire du fonctionnement synchrone de deux convertisseurs quasi-résonants (B2) afin de produire le courant électrique qui doit être connecté à la bande (6).

14. Procédé selon l'une quelconque des revendications 1 à 13, comprenant la mesure de la température ambiante initiale T0 de la soudure avant que la bande (6) soit chauffée, la mesure d'une tension U_{L} à travers la bande (6),
la mesure du courant électrique I_{L} alimenté à la bande (6),
le calcul de la résistance initiale R₀ de la bande avant que la bande (6) soit chauffée,
l'alimentation du courant électrique à la bande 6 d'une manière variable ou constante,
le calcul en continu de la résistance R de la bande (6) sur la base de la tension et du courant mesuré,
le calcul du changement AR de résistance,
la calcul de l'augmentation ΔT de température de la bande (6) sur la base du changement de résistance et le calcul de la température T_{w} de la soudure par l'ajout de la température ambiante initiale T0 de la soudure et de l'augmentation ΔT de température de la bande (6).

15. Procédé selon l'une quelconque des revendications 1 à 14, comprenant la réalisation d'un processus de mesure après que le processus de soudage soit terminé, qui comprend l'alimentation d'un courant Ip à la bande (6) à partir d'une unité indicatrice (11),
la détermination d'un paramètre dépendant de la température résultant Sp de la bande (6) par l'unité indicatrice (11), la valeur de Sp est stockée dans l'unité indicatrice (11),
l'alimentation d'une autre impulsion de courant Ip à la bande (6) à partir de l'unité indicatrice (11) après un intervalle de temps prédéterminé,
la détermination du paramètre Sp dans la bande (6), et le stockage de la valeur de Sp dans l'unité indicatrice (11),
la surveillance et l'évaluation par l'unité indicatrice (11) de la valeur du paramètre Sp ou du changement relatif de la valeur du paramètre Sp,
la répétition du processus de mesure jusqu'à ce que Sp atteigne une valeur plateau ou que le changement relatif de Sp atteigne un niveau prédéterminé, la signalisation de la fin du processus de soudage en utilisant un agencement de signal lorsque l'unité indicatrice (11) indique que le processus de refroidissement s'est terminé,
et le retrait de l'équipement de soudage de la zone de travail de la soudure.

16. Procédé selon l'une quelconque des revendications 1 à 15 pour joindre ou réparer un système de tuyau thermiquement isolé (1) comprenant un tuyau externe en plastique soudable (2) qui entoure un tuyau interne (3) intégré dans une couche isolante (4), dans lequel le tuyau interne (3) se trouve généralement exposé ou est posé nu entre deux extrémités de tuyau externes mutuellement opposées (2a, 2b), dans lequel le procédé comprend le montage d'un manchon (5) de matière plastique soudable par-dessus la partie exposée du tuyau interne (3).

17. Appareil (12) à utiliser lors de l'utilisation du procédé selon l'une quelconque des revendications 1 à 16 lors du montage d'un manchon (5) fabriqué en une pièce et profilé en tant que tube par-dessus et contre le tuyau (2) et la bande (6), chevauchant le tuyau (2) et couvrant la bande (6), et appliquant le courant électrique à la bande (6)
l'appareil comprenant
un dispositif électrique (8) configuré pour appliquer un courant électrique à la bande (6) et chauffer ainsi la bande (6),
un dispositif d'outil de compression (9) configuré pour attribuer une force de pression sur et autour du manchon (5) au niveau de la partie du manchon (5) montée par-dessus, autour et contre le tuyau (2),
où l'outil de compression comprend un dispositif de support (13) ayant une surface de butée concave pour fournir une butée avec la surface de tuyau courbée vers l'extérieur, où le dispositif électrique (8) comprend au moins deux câbles électriques (8a, 8b) ayant chacun un dispositif de fixation (8c) à connecter à la bande (6) et où chaque dispositif de fixation (8c) est conçu pour être en état de marche avec un conducteur (7) connecté à la bande (6).

18. Appareil (12) selon la revendication 17, où l'outil de compression (9) comprend
une sangle de serrage (9a) qui est enroulée en boucle autour du manchon (5) et qui a deux extrémités libres et un dispositif tendeur (10) auquel les extrémités de la sangle de serrage (9a) sont connectées et qui fonctionne pour serrer la boucle et, avec celle-ci, presser le manchon (5) contre le tuyau (2).

19. Appareil (12) selon l'une quelconque des revendications 17 à 18, comprenant un dispositif de support (13) pour aider à placer l'appareil (12) sur l'extérieur du manchon (5) lorsque l'outil de compression (9) est fixé au manchon (5).

20. Appareil (12) selon la revendication 19, où le dispositif de support (13) comprend des rouleaux guides agencés dans une relation parallèle entre eux et espacée entre eux, adjacents au dispositif de support (13).

21. Appareil (12) selon la revendication 19 ou 20, où le dispositif de support (13) comprend une surface de butée qui est concave de façon à fournir une bonne butée avec le manchon courbé vers l'extérieur (5) et dans lequel au moins la surface de butée est constituée d'un matériau électriquement isolant.

22. Appareil (12) selon l'une quelconque des revendications 17 à 21, comprenant un convertisseur de puissance (B1) qui a un convertisseur quasi-résonant (B2) pour produire le courant électrique qui doit être connecté à la bande (6) pendant une période de temps déterminée, pour chauffer la bande (6) et le matériau polymère voisin de sorte qu'ils fondent ensemble autour de la bande (6) afin de former un joint soudé.

23. Appareil (12) selon l'une quelconque des revendications 17 à 22, comprenant deux convertisseurs de puissance connectés en série (B1) qui sont connectés à deux phases différentes et deux convertisseurs quasi-résonants (B2) qui, par l'intermédiaire d'un fonctionnement synchrone, somment la tension de sortie en mettant en oeuvre une fonction de sommation pour produire le courant électrique qui doit être connecté à la bande (6) pendant une période de temps déterminée, pour chauffer la bande (6) et le matériau polymère voisin de sorte qu'ils fondent ensemble autour de la bande (6) afin de former un joint soudé.

24. Appareil (12) selon l'une quelconque des revendications 17 à 23, comprenant une unité de commande et surveillance (SR) qui a des moyens (CS) qui mesurent et régulent le courant électrique qui est alimenté à la bande, et des moyens (VS) qui mesurent et régulent la tension UL à travers la bande (6), un thermoélément (TS) pour la mesure de la température ambiante initiale T0 de la soudure, et une unité de calcul (CU) pour le calcul de la résistance R dans la bande (6) et la température Tw de la soudure.

25. Appareil (12) selon l'une quelconque des revendications 17 à 24, comprenant une unité indicatrice (11) qui comprend une sortie de signal (11a) qui est connectée à la bande (6) afin d'alimenter une impulsion de courant Ip à la bande (6), au moins une entrée de signal (lib) connectée à la bande (6) afin de recevoir un signal concernant un paramètre dépendant de la température résultant Sp, un circuit d'UC (11c) pour l'évaluation du paramètre dépendant de la température résultant Sp, et un agencement de signal (11d).
